# EUROPEAN PATENT SPECIFICATION

(11) **EP 2 454 933 B1**
(45) Date of publication and mention of the grant of the patent: **05.06.2013**
(21) Application number: 10191996.7
(22) Date of filing: 22.11.2010
(51) Int. Cl.: A01G 1/06

(54) **Method and apparatus for strike cutting of plants**
Verfahren und Vorrichtung zum Schneiden von Pflanzenstecklingen
Procédé et appareil pour reprendre des boutures de plantes

(43) Date of publication of application: 23.05.2012
(73) Proprietor: Nederlandse Organisatie voor Toegepast -Natuurwetenschappelijk Onderzoek TNO, 2628 VK Delft (NL)
(72) Inventor: Snel, Robert, 2628 VK Delft (NL); Lansbergen, Rob, 2628 VK Delft (NL); van Os, Peter, 2628 VK Delft (NL); Kruithof, Maarten, 2628 VK Delft (NL); van der Meer, Sander, 2628 VK Delft (NL)
(74) Representative: Jansen, Cornelis Marinus

(56) References cited:
- WO-A1-92/03913
- WO-A1-2004/023863
- WO-A1-2005/034609

## Description

The present invention relates to a method for strike cutting of plants.

More in particular it relates to such a method comprising the subsequent steps of positioning a plant to a carrier, taking an image of at least a part of the plant by an image taking device, analysing the image as to determine a cutting position, cutting the plant into at least one separated part and a remaining part with a cutting device, transferring the at least one separated part of the plant to an output device. The method further comprising deciding whether the plant has to be cut further after said cutting, and comprising a final step of removing the remaining part of the plant from the carrier if no further cutting is required.

The present invention also relates to an apparatus for strike cutting of plants. More in particular it relates to such an apparatus comprising a carrier for carrying at least two plants, an image taking device for providing an image of at least a part of a plant positioned at the carrier, a processing unit for analysis of the image, a cutting device for cutting a part of a plant into a separated part and a remaining part and configured for receiving a signal from the processing unit, a separation device for transferring a separated part of the plant to an output device, the separation unit comprising a gripper for gripping the part of the plant that has to be separated wherein the carrier and the cutting device are movable with respect to each other.

### State of the art

Strike cutting of plants is a process in horticulture that is mainly performed by man power. It is a labour intensive process and therefore costly. On the other hand it is a difficult process to be automated because the cutting of the plants has to be performed carefully and at specific positions of a plant.

Apparatus and method for mechanical separation of cuttings for plants are known, for example from European patent application EP 0 853 873 A1. This known method comprises the manual input of the plants into carriers that are fixed to a conveyor belt. More in particular, in this known method the plants hang in a carrier and this method therefore is in particular suited for plants which are free, viz. are separated from the pot in which the plants are grown. The known apparatus comprises several cutting and vision units in series. A first station of the apparatus is for cutting a lower part of the plant. In subsequent stations other parts of the plant are cut. This known apparatus therefore comprises as many cutting and vision units as the number of cuttings from one plant. The throughput of the plants is, due to sequential character of the process, determined by the most time consuming part of the process. More in particular, not all the units of the apparatus will be in continuous use. During the visual inspection for example, the cutting device of the unit comprising the vision system will be in rest and *vice versa.* The disadvantage of this apparatus and the mechanical separation according to this method is therefore that it is rather complex, expensive, and that the apparatus requires a large amount of space. In addition it is not suitable for standing plants.

The problem of the large amount of space required by a plant cutting device has been recognised in European patent EP 1 377 153 B1. The solution of the problem provided by this patent is the use of only one cutting and vision unit per plant. This solution, however, requires that the plant is kept in the unit for some time to allow the subsequent visual analysis, manipulation into a new proper cutting position, and the cutting itself. In order to obtain an acceptable throughput, the patent provides two parallel operating vision and cutting units. However, also in this known system the vision system and the cutting device will be in use sequentially. As a consequence, also this apparatus and method has the disadvantage that it expensive because it requires a multiple set of vision and cutting units. Further, this apparatus is, like the one described in European patent application EP 0 853 873 A1, not suited for standing plants.

### Summary of the invention

An objective of the present invention is to provide a method for strike cutting a plant which method is fast and accurate.

This objective of the invention is obtained by the method according to the invention which is characterised in that if further cutting of the plant is required, this further cutting is performed after at least one other plant has been cut with said cutting device.

An advantage of cutting at least one other plant before further cutting the first plant further, is that the first plant can be reoriented while the cutting device remains in operation.

The above mentioned objective is obtained with this advantage because the cutting process of plants will not be hindered by reorientation of the plant in case of additional cutting. More in particular the flow of plants to the cutting device can be continuous or semi-continuous. Further, different steps of the process can be performed in parallel for different plants. The method according to the invention allows a plant being cut whereas at the same time another plant is visually analysed and/or oriented. As a consequence, the process will be fast. The cutting process will be accurate because there is sufficient time to orient the plant carefully before the additional cutting takes place.

In an embodiment of the method according to the invention, the positioning of the plant at the carrier comprises placing the plant in a plant holder, the plant holder being attached to the carrier. An advantage of this embodiment is that the position of the plant on the carrier is well defined allowing easy image analysis and cutting.

In a further embodiment of the method according to the invention, the method comprises the step of moving the plant and the image taking device with respect to each other to obtain different views of the plant. An advantage of this embodiment is that a more detailed view, for example a three dimensional view of the plant can be obtained. Further the moving of the plant and image taking device with respect to each other reduces the hindrance caused by parts of the plant that are blocking views in certain positions.

In an even further embodiment, the moving of the plant and the image taking device with respect to each other comprises rotating of the plant along an axis parallel to the stem of the plant. An advantage of such a moving is that it can technically easily be performed and that the central position of the plant on the carrier remains in essence the same allowing easy cutting.

Another objective of the present invention is an apparatus for strike cutting of a plant which apparatus combines a compact construction and accurate cutting with a high speed of the strike cutting.

This objective of the invention is obtained by the apparatus of the invention being characterised in that the carrier is constructed as to present the remaining part to the cutting device for an additional cutting after at least one other plant has been presented to the cutting device.

An advantage of a construction that allows the cutting of at least one other plant before the plant is cut further, is that during cutting of said other plant, the first plant can be reoriented on the carrier as to provide a proper orientation for the further cutting.

The above mentioned objective is obtained with this advantage because this allows performing several steps of the strike cutting to be performed simultaneously without the need of multiple cutting and vision analysis systems. This results in a compact strike cutting apparatus. Because in using such a construction, there is sufficient time for reorientation of the plant, such a positioning can be more accurate.

In an embodiment of the apparatus according to the invention, the carrier comprises a mechanical stiff bearing. An advantage of a stiff mechanical bearing is that the position of the plants and their trajectory is well defined. As a consequence the image taking device can operate independently from the cutting device. When at a specific moment in time a first plant is being cut by the cutting device, the exact orientation of a second plant with respect to the bearing can be determined in the image taking device. Subsequently, the second plant will be moved towards the cutting device, its orientation at the cutting device being well established because the trajectory is fully determined by the moving of the stiff bearing to which the plant is positioned.

In a further embodiment of the apparatus according to the invention, the mechanical stiff bearing is a plate being rotatable around an axis perpendicular to is surface. An advantage of a rotating carrier is that it is compact in construction and that a rotational movement is easily to be constructed.

### Brief description of the figures

- Figure 1: schematic representation of an embodiment of the method
- Figure 2: illustration of a time cycle of the method for three plants
- Figure 3: schematic representation of an embodiment of the apparatus for standing plants
- Figure 4: schematic representation of an embodiment for hanging plants

In the following some embodiments of the method are described in more detail. In these embodiments of the method, the plants are provided and transported in a standing position. Such embodiments of the invention may be used for cutting all types of plants. In particular fittonia, hedera, buxus and roses are plants that preferably are cut when standing. The method, however, is not limited to standing plants. If proper mechanical constructions are used for implementing the method, it can also be used for plants that are transported hanging. It has also to be understood that the method and apparatus are not limited to a specific type of cutting, it may be used, among others, to slip and to trim plants.

### Detailed description the invention

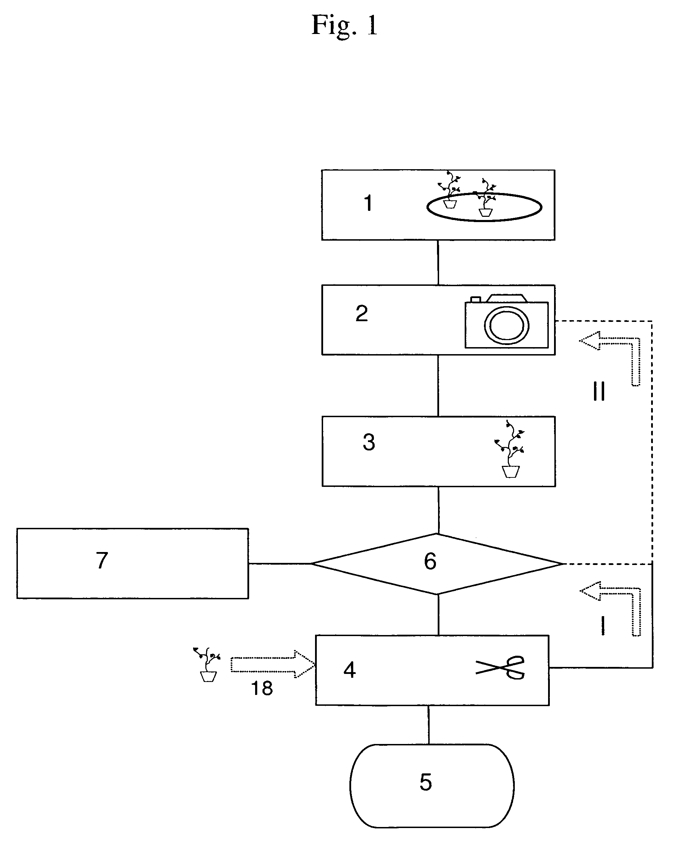

The method according to the invention will be elucidated here with reference to the embodiment shown in figure 1. One of the first steps that have to be performed is providing the plants that have to be cut. Providing the plants can be performed manually, but it is preferred to use an automated supply system. In the case that the method is performed fully automated, the plants may be provided in a continuous or semi-continuous flow of plant holders, for example pots, each containing a single plant. A conveyor belt may be a favourable way of providing the pots, but any other supply system will satisfy. The plants are transported from the supply system to the carrier in order to position the plant at the carrier. Positioning (1) of the plant to the carrier can be performed in several ways and includes methods like placing the plant on the carrier, clamping the plant, or any other method that allows the plant to be transported by the carrier.

If the plants are provided to the carrier by a conveyor belt, pots with plants can be simply pushed onto the carrier. In another embodiment the plants are picked up with a gripper and placed on or in plant holders that are fixed to or placed on the carrier. The positions where the plants are place are preferably predefined locations, viz. locations that have a fixed position on the carrier. Predefining the locations includes methods in which the position to the carrier is determined after the plant has been positioned. However, it is preferred to have the locations defined before a plant is positioned. This includes methods like marking areas where the plants have to be placed, and using clamping means located at well defined positions of the carrier.

Once a plant is positioned at the carrier, it has to be determined at which position or positions the plant has to be cut. For this purpose the method comprises a step (2) in which an image is taken from the plant. Taking the image can for instance be done by a photo or video camera making one or more pictures of the plant. When applying the method in an automated way, the image taking device must be a device, for instance a digital camera, that allows further processing of the image automatically by appropriate software. The image or a plurality of images is used for analysis of the plant geometry in a subsequent step (3). The image of the plant can be obtained by using visible light, however it might also be obtained by infrared light or any other suitable wavelength of electromagnetic radiation, for example radar. The image need even not to be obtained by electromagnetic radiation, but may also be obtained by, for example, ultrasonic or other acoustic waves. Making images may also mean real-time analysis of the image as obtained by a camera. Preferably, such a camera is a digital camera making many pictures at a high speed to allow fast automatic analysis.

Image analysis is required to analyse the image and to determine the cutting position or positions. This image need not to be a image of the whole plant, but the image must cover at least one cutting position of the plant. Typically, the cutting positions are determined by locating the stem and the interconnection with the leave stems. Those skilled in the art of image analysis will know how to implement an algorithm to determine a cutting position. It is appreciated that the cutting position, in general, will depend on the type of plant. The image analysis can also be used to determine the position of the plant at the carrier if required, for instance when the position of the plant is not defined before the plant is positioned at the carrier.

Based on the image analysis it is determined in step (6) whether or not the plant has to be cut or has to be cut further as will be discussed below. If no cutting or further cutting is required or no proper cutting position could be found, the plant will be removed (7) from the carrier.

After a proper cutting position has been determined, the plant has to be provided to a cutting device or a cutting device has to be provided to the plant. Based on the image analysis, the cutting device will cut the plant into a separated part and a remaining part in a subsequent step (4) at a proper cutting position. The separated part of the plant is that part of the plant that is no longer positioned at the carrier due to the cutting. Preferably the separated part is hold by a gripper as of a moment just before the cutting. This gripper may transfer (5) the separated part to an output device. The use of a gripper is preferred because a gripper allows the separated part to be transferred in a well defined orientation into, for example, a pot. One will appreciate that the separated part can also be transferred to an output device in a different way. The separated part may, for example, fall off and collected by hand or any suitable transferring device. Such a transferring device may be a conveyor belt that transports the separated part of he plant.

Usually a plant has to be cut into more than two different parts to obtain more than one strike cutting from a single plant. The number of cuttings can be determined on forehand based on the type of plant, by visual observation of a person, or automatically by means of image analysis. For a fast and accurate strike cutting an image analysis of the individual plants is preferred. The total number of cuttings may be determined before a first cutting of the plant in step (2), or it may be determined later, for instance after cutting. In the later situation, indicated by II in figure 1, it has to be decided after each cutting whether the plant has to be cut further to obtain the required total number of cuttings. In the first situation, indicated by I in figure 1, the decision about further cutting may be based on the earlier obtained image analysis or on a further image analysis of the remaining part of the plant.

Whether or not it is decided that a further cutting of the plant need to be performed, the plant will be removed from the cutting device or, as the case may be, the cutting device will be removed from the plant. This removal makes the cutting device available for cutting another plant (8) that has been positioned at the carrier after the plant for which the process is described here. In the case that a further cutting is required, the plant and the cutting device will be presented to each other later. More in particular, the remaining part of the plant may be inserted in the continuous of semi-continuous flow of plants. This process step can be performed as may times as the number of cuttings.

During the cutting process, the carrier will be carrying plants in different stages of cutting, viz. plants that have to be cut for the first time and plants that have been cut already once or even more times. If all plants have to be cut only once, all locations of the carrier will be available for input of plants to-be-cut after removal of the remaining part of the plant from the carrier. In all other situations, not all locations are available for new plants from the supply system. When applying the method in a fully automated manner, one will have to adjust the different speeds and flows. For an optimal performance, one will have to tune the flow of the supply system and the transfer speed to the output device. The actual throughput of plants may, among others, depend on the speed of image analysis and the cutting process.

After a final cutting, the remaining part will preferably also be used as a cutting and be transported to the output device. However, this part may also be treated as waste.

One image representing just one view of the plant often will not satisfy for determining a proper cutting position. The structure of most plants is too complex to allow finding the proper cutting position from one view only. Therefore it may be preferred to obtain images of the plant from different view points by moving the plant and the image taking device with respect to each other. Usually the plant has to be cut at the stem. Rotating the plant in front of a camera around its stem or, more general along an axis that is parallel to its stem, may provide additional information to obtain a more complete picture of the plant. More in particular, a kind of three dimension view of the plant may be constructed to determine the proper cutting position or positions.

Based on the image analysis the plant may be re-oriented to provide the most optimal orientation of the plant with respect to the cutting device. What actually the most optimal orientation is, will depend, among others, on the complexity of the plant, the degrees of freedom of the cutting device, the speed of the various steps of the method.

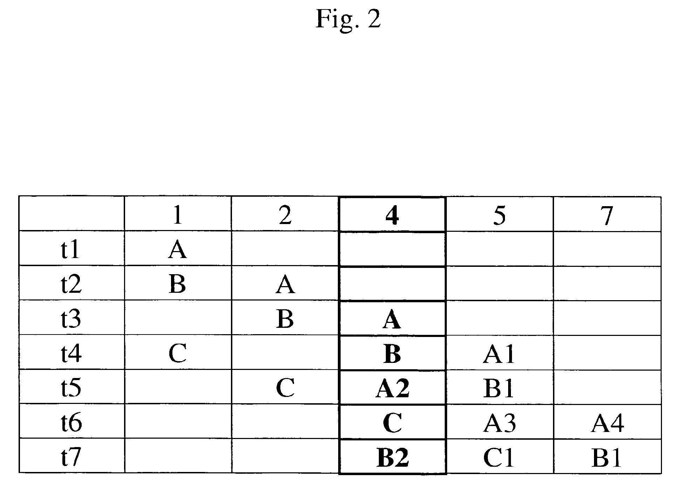

Figure 2 illustrates a possible time cycle of the method for three plants. At time t1 plant A is positioned at the carrier. At time t2 an image is taken of the plant A, while a second plant B is positioned at the carrier. Some time later, at time t3 plant A is being cut, while an image is taken of plant B. At time t4 a separated part A1 of plant A1 is transferred to the output device, plant B is being cut, and a third plant C is positioned at the carrier. While a time t5 an image is taken of this third plant C, the remaining part A2 of plant A is cut and a separated part B 1 of plant B is transported to the output device. Subsequently, plant C is presented to the cutting device, a second separated part A3 of plant A is transferred to the cutting device, while the remaining part A4 of plant A, that need not to be cut further is removed from the carrier. At a later time t7, the remaining part B2 of plant B is being cut, the separated part C1 of plant C is transferred to the output device and the remaining part B1 of plant B that need not to be cut further is removed from the carrier.

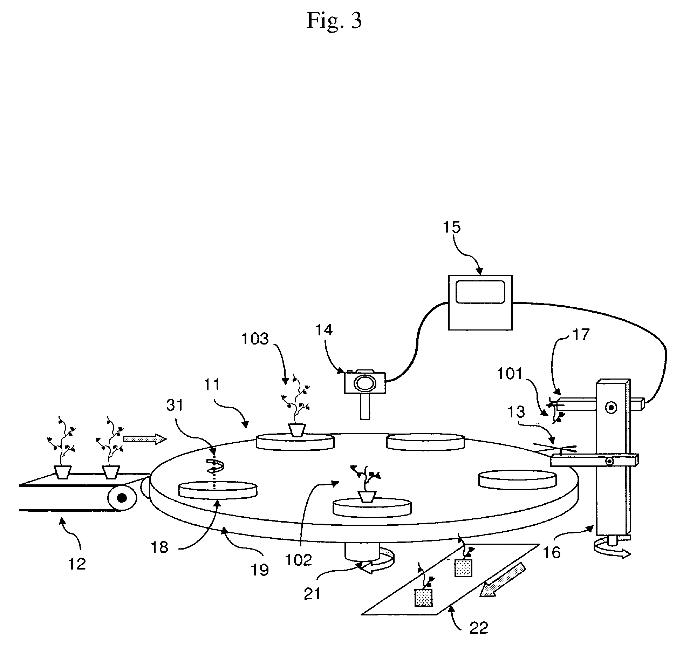

A preferable embodiment of the apparatus according to the invention will be discussed here in more detail referring to figure 3. This embodiment, that is suited for the strike cutting of standing plants, comprises an input device (12) for providing a continuous or semi-continuous flow of individual plants that have to be cut and an output device (20) for transporting the strike cuttings. Although such an input device is preferred, one will appreciate that such an input device is not essential because the plants can also be provided to the carrier manually.

A carrier (11) is situated between the input and the output device. A function of the carrier is to carry and transport the plants during the process, including plants that are cut already once or more times. The carrier according the embodiment discussed here, comprises a rotatable flat plate (19) suited for carrying and transporting standing plants, more in particular for transporting the plants from the camera (14) to the separation device. In a simple embodiment of the apparatus the surface of the plate will be completely flat in order to carry pots, or comprise some rims to define pot positions more accurately. A more dedicated carrier may comprise special plant holders.

The preferred number of locations for plants on the carrier depends on several parameters, including the fluctuation in the number of cuttings for a single plant. If the variation is large, one may prefer a large number of spots to absorb the fluctuations. The same holds if the fluctuations in the supply of new plants is large. It may be preferred to keep the number of locations on the carrier as small as possible in order to obtain a compact apparatus. In addition, a large number of locations and, consequently, a large carrier will result in higher costs. Preferably, the carrier may have between 2 and 20 locations (18) for positioning plants, more preferably between 3 and 10 locations, and even more preferably 4, 5 or 6 locations, depending among others on the size of the carrier and the plants and, as will discussed later, the variation in the number of cuttings for the plants. In particular a carrier with 4, 5 or 6 locations for positioning plants is observed to be very practical.

This embodiment of the apparatus further comprises a camera (14) for taking an image of the plants and a separation device (16) for separating a part from the plant. The separation device comprises a gripper (17) for gripping the part that has to be separated and a cutting device (13) for cutting the stem of the plant. The gripper transposes the strike cutting to the output device (22), which output device preferably is suited for carrying pots or plant holders into which the cutting can be placed.

The input device may be a conveyer belt that is suitable for carrying the pots with plants that have to be cut. The plants can be provided to the carrier for instance by shoving the pots onto the carrier. However, it is preferred to take the plants out of the pots and transfer the plants into plant holders that are fixed to the carrier. This process of taking a plant out of a pot and transfer it to a plant holder can be performed by robotic grippers well known to those skilled in the art. This gripper may be controlled electrically or pneumatically. An advantage of using plant holders is that they have uniform properties, allowing more accurate handling of the plants and that the position of the plants is rather well defined in this way. The predefined position of the plant on the carrier allows faster image analysis. Further, if the position of the plant on the carrier is known accurately, the trajectory of the plant during moving from the image taking device to the separation device will be more accurate, resulting in a better defined cutting position.

Along the side edge of the carrier that is rotatable around an axis (21) perpendicular to its surface, a camera (14) or other image taking device is situated for making an image of the plant after it has been positioned at the carrier (11). The camera comprises or is connected with, a data processing unit (15) for the image analysis. Preferably, the plant is rotated in front of the camera for providing a three-dimensional image of the plant. For this purpose the plant holders of the carrier are constructed as to allow a controlled rotation about the vertical axis (31). The data processing unit comprises an algorithm for determining the best cutting position and orientation of the plant based on for example the distance between different branches of the plant, the accessibility for the cutting device of a cutting position without damaging the plant, the desired size of he strike cutting and the amount of chlorophyll.

The separation device comprises a cutting device (13) which may for example be a knife or scissors. Those skilled in the art will find the most proper cutting tool for the type of plant. The separation device also comprises a gripper (17) to hold the separated part of the plant and to transfer it to the output device. For the standing plants, the gripper has to hold the plant above the cutting position. Although preferably the cutting device and the gripper are integrated into a single robot arm in order to allow a good co-ordination between the cutting and gripping process and to obtain a compact construction, they need not be integrated.

In this embodiment of the apparatus, the camera and the separation device are placed at distinct positions along the rotatable carrier. The effect of this distance is that it will take a certain amount of time for the plant to arrive at the separation device after the image of the plant has been taken. This time can be used for calculating the proper cutting position and for rotating the plant in a position that is most favourable for easy access by the cutting device.

In a particular embodiment of the apparatus, the plant holders on the carrier are rotatable around an axis that is perpendicular to the surface of the carrier. To obtain a good image of the plant and to determine the exact position where the plant has to be cut, it is preferable to combine images form different viewing points. Such images can be obtained by displacing the plant and the image taking device with respect to each other. It has been found that, in case the stem has to be cut, it is in particular favourable to rotate the plant around an axis parallel to the stem in front of the image taking device. For this purpose the carrier may comprise rotatable plant holders (18).

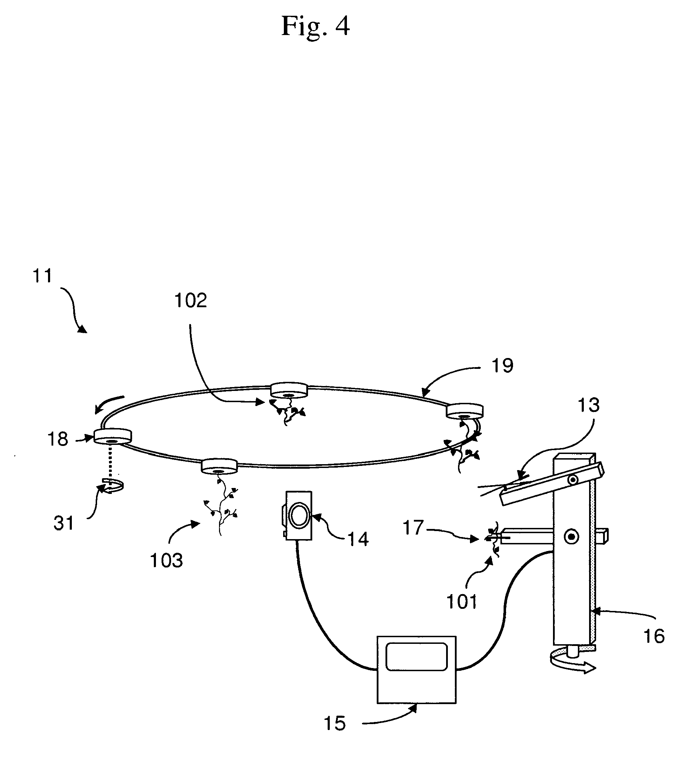

The apparatus as described above is in particular suited for standing plants. However, in different embodiments the apparatus according to the invention is also suited for plants that are hanging. Figure 4 shows an example how the embodiment of figure 3 can be modified accordingly. In this embodiment for plants that are hanging, the carrier (11) comprises a conveyor belt (19) at which clamping means (18) for the plants are attached. However, also for an apparatus in which the plants are transported hanging, a plate like the one in figure 4 or a similar transporting mechanism may be used. The relative position of the cutting device (13) and the gripper (17) of the separation device is different from the separation device shown in figure 4 for standing plants because the plants are attached to the carrier at their upper end instead of being positioned standing on the carrier.

## Claims

1. Method for strike cutting of plants, comprising the subsequent steps of
- positioning (1) a plant to a carrier,
- taking an image (2) of at least a part of the plant by an image taking device,
- analysing (3) the image as to determine a cutting position,
- cutting (4) the plant into at least one separated part and a remaining part with a cutting device,
- transferring (5) the at least one separated part of the plant to an output device,
further comprising deciding (6) whether the plant has to be cut further after said cutting (4), and comprising a final step (7) of removing the remaining part of the plant from the carrier if no further cutting is required
**characterised in that**
if further cutting of the plant is required, this further cutting is performed after at least one other plant has been cut (8) with said cutting device.

2. Method according to claim 1 wherein the step of deciding whether the plant has to be cut further is performed automatically using the image.

3. Method according to claim 1 or 2, wherein positioning of the plant to the carrier comprises placing the plant in a plant holder, the plant holder being attached to the carrier.

4. Method according to any of the preceding claims, wherein the plant is positioned to the carrier in an upstanding position.

5. Method according to any of the preceding claims, comprising a step of moving the plant and the image taking device with respect to each other to obtain different views of the plant.

6. Method according to claim 5, wherein the moving comprises rotating the plant along an axis parallel to the stem of the plant.

7. Method according to any of the preceding claims, wherein the step of transferring the at least one separated part of the plant to an output device comprises placing the separated part of the plant into a pot.

8. Apparatus (10) for strike cutting of a plant according to the method of any of the preceding claims, comprising
- a carrier (11) for carrying at least two plants,
- an image taking device (14) for providing an image of at least a part of a plant positioned at the carrier,
- a processing unit (15) for analysis of the image,
- a cutting device (13) for cutting a part of a plant into a separated part (101) and a remaining part (102) and configured for receiving a signal from the processing unit,
- a separation device (16) for transferring a separated part of the plant to an output device, the separation unit comprising a gripper (17) for gripping the part of the plant that has to be separated
wherein the carrier and the cutting device are movable with respect to each other,
**characterised in that** the carrier is constructed as to present the remaining part (102) to the cutting devices for an additional cutting after at least one other plant (103) has been presented to the cutting device.

9. Apparatus according to claim 8, wherein the carrier comprises a mechanical stiff bearing (19).

10. Apparatus according to claim 8 or 9, wherein the mechanical stiff bearing is a plate being rotatable around an axis (21) perpendicular to its surface.

11. Apparatus according to any of the claims 8 to 10, wherein the carrier comprises plant holders (18) that are movable with respect to the bearing, preferably rotatable along an axis (31) perpendicular to the bearing.

12. Apparatus according to claim 11 wherein the number of plant holders is 4, 5, or 6.

## Patentansprüche

1. Verfahren zum Schneiden von Pflanzen, umfassend die folgenden Schritte:
- Positionieren (1) einer Pflanze an einem Träger,
- Aufnahme eines Bildes (2) von mindestens einem Teil der Pflanze durch eine Bildaufnahmevorrichtung,
- Analysieren (3) des Bildes zur Bestimmung einer Schnittposition,
- Schneiden (4) der Pflanze in mindestens einen getrennten Teil und einen restlichen Teil mit einer Schneidevorrichtung;
- Übertragen (5) des mindestens einen getrennten Teils der Pflanze zu einer Ausgabevorrichtung,
ferner umfassend die Entscheidung (6), ob die Pflanze nach diesem Schneiden (4) weiter geschnitten werden muss, und umfassend einen abschließenden Schritt (7) des Entfernens des restlichen Teils der Pflanze aus dem Träger, falls kein weiteres Schneiden erforderlich ist,
**dadurch gekennzeichnet, dass**
wenn weiteres Schneiden der Pflanze erforderlich ist, dieses weitere Schneiden durchgeführt wird, nachdem mindestens eine andere Pflanze mit der Schneidevorrichtung geschnitten (8) worden ist.

2. Verfahren nach Anspruch 1, wobei der Schritt der Entscheidung, ob die Pflanze weiter geschnitten werden muss, automatisch anhand des Bildes vorgenommen wird.

3. Verfahren nach Anspruch 1 oder 2, wobei das Positionieren der Pflanze an dem Träger das Platzieren der Pflanze in einem Pflanzenhalter, der an dem Träger befestigt ist, umfasst.

4. Verfahren nach einem der vorhergehenden Ansprüche, wobei die Pflanze an dem Träger in einer aufrechten Position positioniert wird.

5. Verfahren nach einem der vorhergehenden Ansprüche, umfassend einen Schritt des Bewegens der Pflanze und der Bildaufnahmevorrichtung in Bezug zueinander, um verschiedene Ansichten der Pflanze zu erhalten.

6. Verfahren nach Anspruch 5, wobei das Bewegen das Drehen der Pflanze entlang einer Achse parallel zum Strunk der Pflanze umfasst.

7. Verfahren nach einem der vorhergehenden Ansprüche, wobei der Schritt der Übertragung des mindestens einen getrennten Teils der Pflanze zu einer Ausgabevorrichtung das Platzieren des getrennten Teils der Pflanze in einen Topf umfasst.

8. Vorrichtung (10) zum Schneiden einer Pflanze nach dem Verfahren eines der vorhergehenden Ansprüche, umfassend
- einen Träger (11) zum Tragen von mindestens zwei Pflanzen,
- eine Bildaufnahmevorrichtung (14) zum Bereitstellen eines Bildes von mindestens einem Teil einer an dem Träger positionierten Pflanze,
- eine Verarbeitungsvorrichtung (15) zum Analysieren des Bildes,
- eine Schneidevorrichtung (13) zum Schneiden eines Teils einer Pflanze in einen getrennten Teil (101) und einen restlichen Teil (102) und konfiguriert zum Empfangen eines Signals von der Verarbeitungsvorrichtung,
- eine Trennvorrichtung (16) zum Übertragen eines getrennten Teils der Pflanze zu einer Ausgabevorrichtung, wobei die Trennvorrichtung einen Greifer (17) zum Greifen des Teils der Pflanze, der getrennt werden muss, umfasst
wobei der Träger und die Schneidevorrichtung in Bezug zueinander beweglich sind,
**dadurch gekennzeichnet, dass** der Träger konstruiert ist, um den restlichen Teil (102) den Schneidevorrichtungen für einen weiteren Schnitt zu präsentieren, nachdem mindestens eine andere Pflanze (103) der Schneidevorrichtung präsentiert wurde.

9. Vorrichtung nach Anspruch 8, wobei der Träger ein mechanisches starres Lager (19) umfasst.

10. Vorrichtung nach Anspruch 8 oder 9, wobei das mechanische starre Lager eine Platte ist, die um eine Achse (21) lotrecht zu ihrer Oberfläche drehbar ist.

11. Vorrichtung nach einem der Ansprüche 8 bis 10, wobei der Träger Pflanzenhalter (18) umfasst, die in Bezug auf das Lager beweglich sind, vorzugsweise drehbar entlang einer Achse (31) lotrecht zu dem Lager.

12. Vorrichtung nach Anspruch 11, wobei die Anzahl der Pflanzenhalter 4, 5 oder 6 beträgt.

## Revendications

1. Méthode de bouturage de plantes, comprenant les étapes suivantes de :
- positionnement (1) d'une plante sur un transport
- prise d'une image (2) d'au moins une partie de la plante par un dispositif de prise de vue,
- analyse (3) de l'image de manière à déterminer une position de coupe,
- coupe (4) de la plante en au moins une partie séparée et une partie restante avec un dispositif de coupe,
- transfert (5) d'au moins une partie séparée de la plante vers un dispositif de sortie,
comprenant en outre la décision (6) de si la plante doit être davantage coupée après ladite coupe (4) et comprenant une étape finale (7) de retrait de la partie restante de la plante du transport si aucune coupe supplémentaire n'est requise.
**caractérisée en ce que**
si une coupe supplémentaire de la plante est requise, cette coupe supplémentaire est réalisée après qu'au moins une autre plante ait été coupée (8) avec ledit dispositif de coupe.

2. Méthode selon la revendication 1 dans laquelle l'étape de décision de si la plante doit être davantage coupée est réalisée automatiquement à l'aide de l'image.

3. Méthode selon la revendication 1 ou 2, dans laquelle le positionnement de la plante sur le transport comprend le placement de la plante dans un support de plante, le support de plante étant fixé au transport.

4. Méthode selon l'une quelconque des revendications précédentes, dans laquelle la plante est positionnée sur le transport dans une position droite

5. Méthode selon l'une quelconque des revendications précédentes, comprenant une étape de déplacement de la plante et du dispositif de prise de vue l'un par rapport à l'autre pour obtenir différentes vues de la plante.

6. Méthode selon la revendication 5, dans laquelle le déplacement comprend la rotation de la plante le long d'un axe parallèle à la tige de la plante.

7. Méthode selon l'une quelconque des revendications précédentes, dans laquelle l'étape de transfert d'au moins une partie séparée de la plante vers un dispositif de sortie comprend le placement de la partie séparée de la plante dans un pot.

8. Appareil (10) pour bouturer une plante selon la méthode de l'une quelconque des revendications précédentes, comprenant
- un transport (11) pour transporter au moins deux plantes,
- un dispositif de prise de vue (14) pour fournir une image d'au moins une partie d'une plante positionnée sur le transport,
- une unité de traitement (15) pour analyse de l'image,
- un dispositif de coupe (13) pour couper une partie d'une plante en une partie séparée (101) et une partie restante (102) et configuré pour recevoir un signal de l'unité de traitement,
- un dispositif de séparation (16) pour transférer une partie séparée de la plante vers un dispositif de sortie, l'unité de séparation comprenant une pince (17) pour agripper la partie de la plante qui doit être séparée
dans lequel le transport et le dispositif de coupe sont mobiles l'un par rapport à l'autre,
**caractérisé en ce que** le transport est construit de manière à présenter la partie restante (102) au dispositif de coupe pour une coupe supplémentaire après qu'au moins une autre plante (103) ait été présentée au dispositif de coupe.

9. Appareil selon la revendication 8, dans lequel le transport comprend un palier mécanique rigide (19).

10. Appareil selon la revendication 8 ou 9, dans lequel le palier mécanique rigide est une plaque pouvant pivoter autour d'un axe (21) perpendiculaire à sa surface.

11. Appareil selon l'une quelconque des revendications 8 à 10, dans lequel le transport comprend des supports de plantes (18) mobiles par rapport au palier, de préférence pouvant pivoter le long d'un axe (31) perpendiculaire au palier.

12. Appareil selon la revendication 11 dans lequel le nombre de supports de plantes est 4, 5, ou 6
